# NEUE EUROPÄISCHE PATENTSCHRIFT

(11) **EP 0 430 282 B2**
(45) Veröffentlichungstag und Bekanntmachung des Hinweises auf die Entscheidung über den Einspruch: **08.09.2004**
(45) Hinweis auf die Patenterteilung: 18.10.1995
(21) Anmeldenummer: 90122971.6
(22) Anmeldetag: 30.11.1990
(51) Int. Cl.: B32B 27/08, B42D 15/10

(54) **Mehrschichtige Ausweiskarte mit langer Lebensdauer**
Multi-layered identity card with high durability
Carte d'identité multicouche à durée de vie prolongée

(30) Priorität: 01.12.1989 DE 3939864
(43) Veröffentlichungstag der Anmeldung: 05.06.1991
(73) Patentinhaber: Giesecke & Devrient GmbH, 81667 München (DE)
(72) Erfinder: Riedl, Josef, W-8053 Attenkirchen (DE)
(74) Vertreter: Klunker . Schmitt-Nilson . Hirsch

(56) Entgegenhaltungen:
- EP-A- 0 384 252
- US-A- 4 423 185
- Beiersdorf AG Produktinformation "Technicoll 8410", 8/88
- Makrolon-Richtwerte
- Produktinformation technicoll 8410 - Beiersdorf

## Beschreibung

Die Erfindung betrifft eine mehrschichtige Ausweiskarte in Form eines Kartenlamimats, bestehend aus einem ein - oder mehrschichtigen Kartenkern und jeweils beidseitig zum Kartenkern angeordneten Karten deckschichten.

Ausweiskarten haben mittlerweile eine große Bedeutung erlangt und sind aus dem täglichen Leben nicht mehr wegzudenken. Das Anwendungsspektrum reicht von einfachen Eintrittsausweisen für Veranstaltungen, Betriebsausweisen und Mitgliedskarten bis zu hochwertigen und mit vielfältigen Sicherungstechniken ausgestatteten Kreditund Scheckkarten.

Entsprechend dem Anwendungsbereich werden an derartige Ausweiskarten unterschiedliche Anforderungen gestellt, sowohl was die Lebensdauer der Karte, die Herstellungs- und Personalisierungskosten als auch den Sicherheitswert betrifft.

Ausweiskarten für einmalige Ereignisse oder Veranstaltungen unterliegen keinen großen Belastungen und können daher, soweit keine praktischen oder repräsentativen Gründe dagegen sprechen, aus Papier hergestellt werden.

An Betriebsausweise und insbesondere an Scheckkarten werden jedoch erheblich höhere Anforderungen gestellt, da sie den Beanspruchungen des täglichen Gebrauchs unterliegen und ihre Funktionsfähigkeit über einen längeren Zeitraum behalten sollen.

Der weitaus größte Teil der im Umlauf befindlichen Ausweiskarten besteht mittlerweile aus Vollplastikkarten, wobei als Kartenmaterial hauptsächlich Polyvinylchlorid (PVC) Verwendung findet, sowohl wegen der relativ geringen Kosten als auch wegen der einfachen Verarbeitbarkeit dieses Materials. Während für Billigkarten und Karten mit kurzer Lebensdauer, soweit aus Kunststoff hergestellt, einschichtige Karten ausreichend sind, werden z.B. im Scheckkartenbereich wegen der erhöhten Anforderungen an die Lebensdauer und Belastbarkeit sowie aus Sicherheitsgründen mehrschichtige Kartenlaminate aus unterschiedlichen Kunststoffschichten verwendet.

Ein- oder mehrschichtige Kunststoffkarten aus reinem Hart-PVC sind zwar kostengünstig herzustellen und relativ unempfindlich gegen äußeren Verschleiß wie Kratzer etc., die mechanische Belastbarkeit, insbesondere bei tiefen Temperaturen, ist jedoch gering, so daß diese Karten unter Biege-Wechsel-Beanspruchungen, wie sie im täglichen Gebrauch häufig auftreten, sehr leicht brechen und damit unbrauchbar werden. Die Lebensdauer derartiger Karten ist daher in der Regel nicht ausreichend, so daß solche Karten nur noch in Sonderfällen eine praktische Bedeutung haben.

Zur Verringerung dieses Problems werden bei den heute gebräuchlichen PVC-Karten in der Regel die äußeren Kartenschichten zwar weiterhin aus Hart-PVC gebildet, für die inneren Schichten werden jedoch modifizierte Hart-PVC-Folien verwendet, die gegenüber Hart-PVC weicher und flexibler sind. Das Kartenlaminat wird dadurch widerstandsfähiger gegen Biege-Wechsel-Belastungen und weist bei normalen Umweltbedingungen und normalem Gebrauch eine Lebensdauer in der Größenordnung von 2 bis 5 Jahren auf.

Bei widrigen Umweltbedingungen wie sehr hohen oder sehr tiefen Temperaturen und insbesondere bei unsachgemäßer Aufbewahrung im täglichen Gebrauch treten jedoch auch bei diesen Ausweiskarten Probleme auf. Niedrige Temperaturen führen zu einer Versprödung des Materials und bei hohen Temperaturen nimmt die Formbeständigkeit rapide ab. Abgesehen davon, daß bei sehr starken Biegebeanspruchungen eine PVC-Karte leicht bricht (Weißbruch), hat die relativ niedrige Biegelastzahl von PVC zur Folge, daß insbesondere Karten mit langer Laufzeit zu Deformationsrissen und Ermüdungsbruch neigen. Ein weiterer Nachteil ist die mangelnde Formstabilität bei der durchaus üblichen Aufbewahrung der Ausweiskarte in Geldbörsen, was über längere Zeit zu einer bleibenden Verformung der Karte führen kann. Eine bleibende Restwölbung der Karte kann jedoch insbesondere bei Automatenkarten zu Störungen führen, wenn z.B. die Daten auf dem Magnetstreifen bei zu starker Wölbung der Karte nicht mehr gelesen werden können.

Ein anderes Problem bei PVC-Karten ist die sogenannte Weichmacherwanderung, da bei der Aufbewahrung in Kunstledergeldbörsen oder Weich-PVC-Etuis die Weichmacher in die PVC-Schichten der Karte wandern, so daß die Karte leicht brüchig wird und die Kartenstabilität mit der Zeit abnimmt.

Zur Lösung des Weichmacherproblems bei Ausweiskarten wurde in der DE-PS 31 38 559 vorgeschlagen, chemisch resistente Sperrschichten aus PE (Polyäthylen), Papier oder PETP (Polyäthylenterephtalat) unter den äußeren PCV-Deckfolien anzuordnen, die eine Wanderung der Weichmacher in den PVC-Kartenkern verhindern. Damit kann sehr wirkungsvoll das Weichmacherproblem gelöst werden. Es sind aber besondere Maßnahmen zu treffen, um einen guten Kartenverbund herzustellen, da sich die Sperrschichtmaterialien, sofern sie aus PETP oder Papier bestehen, nicht ohne weiteres mit PVC verbinden.

Es sind zwar schon Ausweiskarten mit guter chemischer Resistenz und guter Formbeständigkeit vorgeschlagen worden, die aus PC (Polycarbonat), PE, PETP oder Kombinationen derartiger Kartenschichten bestehen, die Gefahr des Totalbruchs dieser Karten bei sehr starken Biegebanspruchungen ist jedoch noch hoch Außerdem sind derartige Ausweiskarten relativ "hart". d.h. sie sind zwar formstabil. aber die gegenüber PVC-Karten hohe Biegesteifigkeit ist für den täglichen Gebrauch ein unerwünschter Nachteil.

Aus der GB-A 2 081 644 ist bereits ein Kartenverbund bekannt, der aus einem ein- oder mehrschichtigen Kartenkern und Deckfolien aus PVC besteht. Der Kartenkern ist dabei mit einer Aussparung versehen, in die ein integrierter Schaltkreis eingebracht wird. Als Zwischenschicht können zwischen die Deckschichten und die Kernschicht Polyurethan-Heizschmelzkleberschichten eingefügt werden, deren Erweichungstemperatur unter denen der übrigen Schichten liegen, so daß der integrierte Schaltkreis nach dem Laminieren der Schichten von einer elastischen Kleberschicht umgeben ist, die mechanische Belastungen fernhält.

Aufgabe der Erfindung ist es daher, eine Ausweiskarte zu schaffen, die eine hohe Lebensdauer bei gleichbleibend guter Formstabilität auch bei extremen Umweltbedingungen aufweist und gleichzeitig hinreichend elastisch ist, um auch extremen Biegebelastungen zu widerstehen.

Diese Aufgabe wird durch die im Hauptanspruch angegebenen Merkmale gelöst.

Als hochtemperaturbeständiger Kunststoff wird vorzugsweise Polycarbonat (PC) eingesetzt.

Als thermoplastisches Elastomer (TPE) findet vorzugsweise thermoplastisches Polyurethan (TPU) Verwendung, es können jedoch auch andere thermoplastische Elastomere eingesetzt werden.

Grundgedanke der Erfindung ist es, die hervorragenden Eigenschaften des hochtemperäturstabilen Kunststoffes, wie z.B. von Polycarbonat, bezüglich Formbeständigkeit und Resistenz gegen äußere Umwelteinflüsse zu nutzen und gleichzeitig durch eine sehr elastische Komponente im Kartenverbund den Kartenaufbau so flexibel zu gestalten, daß einerseits die bei Biege-Wechselbelastungen auftretenden Scher- und Spannungskräfte aufgenommen werden und andererseits die dabei auftretenden Verformungen wieder rückgestellt werden, so daß derartige Belastungen auch bei sehr starker Biegebelastung weder zum Kartenbruch noch zu einer bleibenden Verformung führen.

Zur Erzielung der erfindungsgemäßen Funktion ist es notwendig, daß die thermoplastischen Elastomerschichten eine Dicke aufweisen in der Größenordnung von 50-200 µ, vorzugsweise 100 µ. Die aus einem hochtemperaturstabilen Kunststoff bestehenden Schichten weisen im äußeren Bereich (Deckfolien) eine Dicke von 50-200 µ auf, vorzugsweise von 100 µ . Als Kartenkern finden bevorzugt Schichtdicken von etwa 100-500 µ in Verwendung.

Eine bevorzugte Ausführungsform einer erfindungsgemäßen Ausweiskarte mit einem symmetrischen Kartenaufbau weist einen opaken und ggf. mit einem Druckbild versehenen Kartenkern aus PC auf, der beidseitig mit einer transparenten Schicht aus TPU und einer transparenten PC-Schicht als Deckfolie laminiert ist.

Eine derartige Ausweiskarte weist eine Reihe von Vorteilen gegenüber den bekannten Ausweiskarten auf, die sie für den Einsatz auch unter extremen Umweltbedingungen und für lange Lebensdauern prädestinieren.

Die Temperaturbeständigkeit einer derartigen Karte ist durch die Verwendung von PC wesentlich höher als bei PVC-Karten, sowohl bei hohen als auch bei tiefen Temperaturen. Die Oberfläche ist druck-, stoß- und kratzfest und chemisch sehr resistent. Die Formstabilität wird durch die hohen mechanischen Rückstellkräfte von PC gewährleistet. Durch die Verwendung von TPU als sehr elastischer Komponente im Kartenaufbau wird die Bruchgefahr auf ein Minimum reduziert. Eine Zerstörung der Karte ist im täglichen Gebrauch auch unter extremen Witterungsbedingungen und bei ständigen Biegebelastungen praktisch ausgeschlossen.

Gerade die hohe Temperaturbeständigkeit ist ein wichtiger Vorteil in Anwendungsgebieten, in denen die Funktion der Ausweiskarte innerhalb eines breiten Temperaturbereichs sicherzustellen ist. Eine derartige Anwendung findet sich beispielsweise beim Mobilfunk, da die Zugangberechtigung z.B. bei Autotelefonen durch Chipkarten geprüft wird und die Kartenstabilität und die Funktionsfähigkeit auch bei Temperaturen von -30 bis +80 °C uneingeschränkt garantiert werden muß.

Aus dem Verbund von PC und TPU resultiert auch eine sehr viel höhere mechanische Stabilität des Kartenverbunds bei dynamischen Beanspruchungen als bei PVC- oder reinen PC-Karten, da Spannungs- und Scherkräfte durch die TPU-Schicht aufgenommen werden.

Durch das Vorhandensein der sehr elastischen TPU-Schichten ergibt sich auch ein gutes Hochprägeverhalten der Karten, was bei reinen PC-Karten bisher immer ein Problem darstellte.

Ein weiterer Vorteil besteht darin, daß trotz der im Vergleich zu PVC höheren Erweichungstemperatur von PC herkömmliche Kaschiervorrichtungen benutzt werden können. Aufgrund der Heißsiegelklebereigenschaften von TPU ist es nämlich nicht notwendig, die PC-Schichten bis zur Erweichungstemperatur aufzuheizen, da durch die TPU-Schichten auch bei den für PVC üblichen Kaschiertemperaturen ein sehr guter Kartenverbund erzielt wird.

Wegen dieser Heißsiegelklebereigenschaften von TPU ist es sogar möglich, neben gleichartigen Schichtmaterialien für Deckfolie und Kartenkern auch unterschiedliche Materialien zu verwenden.

Weitere Vorteile und Ausführungsbeispiele werden anhand der nachstehend aufgeführten Figuren erläutert.
- Fig. 1: Karte mit PC-Kern und PC/TPU-Deckschichten
- Fig. 2: Karte mit Kern aus PC-Schichten durch eine TPU-schicht miteinander verbunden und PC/TPU-Deckschichten.

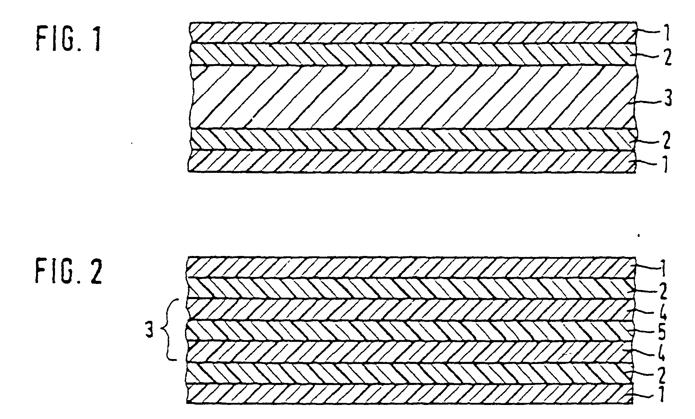

In Fig.1 ist eine erste Ausführungsform einer erfindungsgemäßen Ausweiskarte dargestellt. Sie besteht aus einem opaken und ggf. mit einem Druckbild versehenen Kartenkern 3 aus Polycarbonat (PC) mit einer Dicke von 400 µ, beidseitig angeordneten transparenten TPU-Schichten 2 mit einer Dicke von 100 µ und transparenten Deckfolien 1 aus PC mit einer Dicke von 125 µ, wobei die Schichten 1 und 2 auch als Verbundfolien ausgeführt sein können. Als TPU-Schichten 2 sind beispielsweise Folien aus thermoplastischen Polyurethanen auf Polyester-oder Polyetherbasis geeignet.

Ein derartiges Kartenlaminat kann mit herkömmlichen, bei PVC-Karten gebräuchlichen Kaschiervorrichtungen hergestellt werden, wobei die Kaschiertemperatur im Bereich von 160 bis 210 °C liegt. Vorteilhaft ist dabei insbesondere, daß die Kaschiertemperatur auch unterhalb der Erweichungstemperatur von PC liegen kann, da durch die TPU-Schicht aufgrund deren Heißsiegelklebereigenschaften ein sehr guter Kartenverbund erzielt wird und somit herkömmliche Druckfarben verwendet werden können.

Die äußeren PC-Deckfolien 1 stellen sicher, daß die Karte stoß-, druck-, kratzfest und chemisch sehr resistent ist. Zusammen mit dem PC-Kartenkern 3 wird die hohe Temperaturbeständigkeit und aufgrund der hohen mechanischen Rückstellkräfte von PC die notwendige Formstabilität garantiert, während die TPU-Schichten 2 der Karte eine sehr hohe Elastizität gegenüber Biege-Wechselbelastungen verleihen und somit die Bruchgefahr auch bei extremen Temperaturverhältnissen auf ein Minimum reduzieren.

Durch die Anzahl und die Dicke der TPU Schichten und der PC-Schichten ist das elastische Verhalten bzw. die "Weichheit" oder "Härte" einer erfindungsgemäßen Ausweiskarte beeinflußbar.

In Fig. 2 ist ein gegenüber Fig. 1 flexiblerer Kartenaufbau dargestellt. Der in Fig.1 dargestellte einschichtige PC-Kern 3 ist in diesem Ausführungsbeispiel durch zwei PC-Folien 4 ersetzt, die durch eine TPU-Schicht 5 verbunden sind, was der Ausweiskarte durch den höheren TPU-Anbeil ein insgesamt elastischeres Verhalten verleiht.

Zusammenfassend kann man sagen, daß sowohl durch vollständige PC-TPU-Karten als auch durch Einlagerung von PC-TPU-Schichten in bekannte Kartenaufbauten eine wesentliche Erhöhung der Lebensdauer erzielt wird, die durch die sich ergänzenden Eigenschaften der Formstabilität und Elastizität der hochtemperaturstabilen Kunststoffe und thermoplastischen Elastomere erreicht wird.

Der Fachmann ist natürlich in der Auswahl der thermoplastischen Elastomeren nicht auf TPU beschränkt, da ihm auf diesem Gebiet ein breites Spektrum von Materialien zur Verfügung steht, aus dem er je nach den Anforderungen die geeigneten aussuchen kann.

Als hochtemperaturstabile Kunststoffe stehen neben PC auch Polyethersulfon (PES), Polyetheretherketon (PEEK), Polyphenylenoxid (PPO), Polyphenylensulfid (PPS), Polyethylenterephtalat (PET), Polybuthylenterephtalat (PBT), Polyoxymethylen (POM), Polysulfon (PSU), Polyetherimid (PEI), Polyamid (PA) zur Verfügung

Als geeignete thermoplastische Elastomere gibt es die Gruppe der thermoplastischen Polyurethane, die Gruppe der thermoplastischen Copolyester und die Gruppe der thermoplastischen Polyether-Block-Amide.

## Patentansprüche

1. Mehrschichtige Ausweiskarte in Form eines Kartenlaminats, bestehend aus einem ein- oder mehrschichtigen Kartenkern und jeweils beidseitig zum Kartenkern angeordneten Kartendeckschichten, **dadurch gekennzeichnet, daß** die Deckschichten aus einem hochtemperaturstabilen Kunststoff mit einer Schichtdicke von 50 - 200 µm bestehen, wobei der Kartenkern eine Schicht aus einem hochtemperaturstabilen Kunststoff aufweist und mit den Deckschichten durch beidseitig zum Kartenkern liegenden Schichten aus einem thermoplastischen Elastomer miteinander verbunden ist und die im Kartenlaminat vorhandenen thermoplastischen Elastomerschichten eine Dicke von 50 - 200 µm aufweisen, wobei der hochtemperaturstabile Kunststoff ausgewählt ist aus Polycarbonat (PC), Polyethersulfon (PES), Polyetheretherketon (PEEK), Polyphenylenoxid (PPO), Polyphenylensulfid (PPS), Polyethylen-terephthalat (PET), Polybutylenterephthalat (PBT), Polyoxymethylen (POM), Polysulfon (PSU), Polyetherimid (PEl) oder Polyamid (PA)

2. Ausweiskarte nach Anspruch 1, **dadurch gekennzeichnet, daß** der hochtemperaturstabile Kunststoff der Deckschichten Polycarbonat oder Polyethylenterephtalat ist.

3. Ausweiskarte nach Anspruch 1 oder 2, **dadurch gekennzeichnet, daß** der Kartenkern aus zwei Schichten (4) eines hochtemperaturstabilen Kunststoffes besteht, die durch eine Schicht (5) eines thermoplastischen Elastomers miteinander verbunden sind.

4. Ausweiskarte nach einem oder mehreren der vorangegangenen Ansprüche, **dadurch gekennzeichnet, daß** die aus dem thermoplastischen Elastomer bestehenden Kartenschichten eine Schichtdicke von 100 µm aufweisen.

5. Ausweiskarte nach Anspruch 1 oder 2, **dadurch gekennzeichnet, daß** der Kartenkern eine Dikke von 100 bis 500 µm aufweist.

6. Ausweiskarte nach Anspruch 1, **dadurch gekennzeichnet, daß** die aus dem hochtemperaturstabilen Kunststoff bestehende Deckschicht und die aus dem thermoplastischen Elastomer bestehende Kartenschicht als Verbundschicht ausgeführt sind.

7. Ausweiskarte nach Anspruch 1 bis 6, **dadurch gekennzeichnet, daß** der hochtemperaturbeständige Kunststoff des Kartenkerns aus Polycarbonat besteht.

8. Ausweiskarte nach einem oder mehreren der vorangegangenen Ansprüche, **dadurch gekennzeichnet, daß** das thermoplastische Elastomer ein thermoplastisches Polyurethan ist.

## Claims

1. A multilayer identity card in the form of a card laminate, consisting of a single-or multilayer card core and card cover layers disposed on each side of the card core, **characterized in that** the cover layers are made of a plastics material with high temperature stability having a layer thickness of 50 to 200 µm, the card core having a layer made of a plastics material with high temperature stability and being interconnected with the cover layers by layers made of a thermoplastic elastomer located on each side of the card core, and the thermoplastic elastomer layers present in the card laminate having a thickness of 50 to 200 µm, the plastics material with high temperature stability being selected from polycarbonate (PC), polyethersulfone (PES), polyetheretherketone (PEEK), polyphenylene oxide (PPO), polyphenylene sulfide (PPS), polyethylene terephthalate (PET), polybutylene terephthalate (PBT), polyoxymethylene (POM), polysulfone (PSU), polyetherimide (PEI) or polyamide (PA).

2. The identity card of claim 1, **characterized in that** the plastics material with high temperature stability of the cover layers is polycarbonate or polyethylene terephthalate.

3. The identity card of claim 1 or 2, **characterized in that** the card core consists of two layers (4) of a plastics material with high temperature stability which are interconnected by a layer (5) of a thermoplastic elastomer.

4. The identity card of one or more of the preceding claims, **characterized in that** the card layers made of the thermoplastic elastomer have a layer thickness of 100 µm.

5. The identity card of claim 1 or 2, **characterized in that** the card core has a thickness of 100 to 500 µm.

6. The identity card of claim 1, **characterized in that** the cover layer made of the plastics material with high temperature stability and the card layer made of the thermoplastic elastomer are designed as a compound layer.

7. The identity card of claims 1 to 6, **characterized in that** the plastics material with high temperature stability of the card core consists of polycarbonate.

8. The identity card of one or more of the preceding claims, **characterized in that** the thermoplastic elastomer is a thermoplastic polyurethane.

## Revendications

1. Carte d'identification multicouches en forme de carte stratifiée, composée d'un noyau de carte mono- ou multicouche et des couches de recouvrement de la carte disposées respectivement sur les deux faces du noyau de la carte, **caractérisée en ce que** les couches de recouvrement sont composées d'une matière synthétique stable à des températures élevées avec une épaisseur de couche de 50 à 200 µm, le noyau de carte présentant une couche en une matière synthétique stable à des températures élevées et le noyau de carte étant réuni aux couches de recouvrement au moyen de couches sur ses deux faces composées d'un élastomère thermoplastique présentes dans le stratifié de carte présentant l'une et l'autre une épaisseur de 50 à 200 µm, la matière synthétique résistant aux températures élevées étant choisies parmi les polycarbonates (PC), polyéthersulfones (PES), polyétheréther cétones (PEEK), polyphénylène oxyde (PPO), polyphénylène sufure (PPS), polyéthylène téréphtalate (PET), polybutylène-téréphtalate (PBT), polyoxyméthylène (POM), polysulfone (PSU), polyesterimide (PEI) ou polyamide (PA).

2. Carte d'identification selon la revendication 1, **caractérisée en ce que** la matière plastique stable à des températures élevées des couches de recouvrement est du polycarbonate ou du polyéthylène téréphtalate.

3. Carte d'identification selon la revendication 1 ou 2, **caractérisée en ce que** le noyau de carte est composé de deux couches (4) d'une matière plastique stable à des températures élevées, qui sont reliées ensemble au moyen d'une couche (5) d'un élastomère thermoplastique.

4. Carte d'identification selon une ou plusieurs des revendications précédentes, **caractérisée en ce que** les couches de la carte composées d'un élastomère thermoplastique présentent une épaisseur de couche de 100 µm.

5. Carte d'identification selon la revendication 1 ou 2, **caractérisée en ce que** le noyau de carte présente une épaisseur de 100 à 500 µm.

6. Carte d'identification selon la revendication 1, **caractérisé en ce que** la couche de recouvrement composée de la matière plastique stable a des températures élevées et la couche de la carte composée d'un élastomère thermoplastique, sont réalisées en forme de couches composites ou stratifiées.

7. Carte d'identification selon les revendications 1 à 6, **caractérisée en ce que** la matière plastique résistant à des températures élevées du noyau de la carte est composée de polycarbonate.

8. Carte d'identification selon une ou plusieurs des revendications précédentes, **caractérisée en ce que** l'élastomère thermoplastique est un polyuréthane thermoplastique.
